# EUROPEAN PATENT APPLICATION

(11) **EP 1 860 140 A1**
(43) Date of publication of application: **28.11.2007**
(21) Application number: 06425356.0
(22) Date of filing: 25.05.2006
(51) Int. Cl.: C08J 7/00, B32B 27/00, B05D 3/06

(54) **Multilayered product and method for its production**

(71) Applicant: MANIFATTURA TUBI GOMMA S.p.A., I-36040 Grisignano di Zocco (Vicenza) (IT)
(72) Inventor: Marcolin, Pietro, Due Carrare, Padova (IT)
(74) Representative: Ponchiroli, Simone

(57) **Abstract**

A multi-layer product comprises at least a first layer mainly made of a perfluorinated material and having a modified outer surface, and at least one covering layer mainly made of rubber and applied on the outer surface of the first layer without any adhesive being inserted between them. The outer surface of the first layer is modified in such a way that, compared with the unmodified perfluorinated material, it has a reduced quantity of fluorine F atoms, a distribution of hydrogen H atoms and/or nitrogen N atoms, and substantially the same quantity of oxygen O atoms. There is also a method for production of the multi-layer product.

## Description

The present invention relates to a multi-layer product with direct adhesion of a rubber-based layer on a perfluorinated material-based layer, as well as a method for production of said product. In particular, the present invention is intended for the production of multi-layer tubes in which a perfluorinated material-based inner layer must be covered with a rubber-based material.

Perfluorinated materials are known for their high level of chemical inertia, temperature resistance, surface specularity (low wettability), limited adhesion to other materials and high level of impermeability, which make them particularly suited to many applications. In particular, they are widely used in the production of the inner sheaths of multi-layer tubes intended for conveying particularly aggressive fluids.

However, the properties of perfluorinated materials indicated above are also a disadvantage if something has to be made to adhere to the perfluorinated material, and in particular in the case of a rubber-based material.

However, all fluorinated materials have similar problems.

Therefore, over time various methods were developed for treatment of the surface of fluorinated materials, designed to modify their surface molecular structure and so allow them to be glued to other materials. In some cases said methods were also used with fairly good results for perfluorinated materials.

A first known technology involves chemical treatment of the surface of the fluorinated material with alkali metals (normally sodium) in various conditions (by sublimation, in a solution of NH₃ or Naphthalene and/or other solvents which increase its solubility), for example as described in patent EP 1 450 092 by the same Applicant. Such treatment provides surface changes which allow the adhesion of a primer and then subsequent gluing of other layers of polymeric or rubber material. Moreover, the adhesion achieved in this way is very good, since separation loads greater than 3.5 kg/cm (3.43 N/mm) are obtained, corresponding to the tearing load of rubber.

However, this first known technology has several disadvantages.

On one hand it requires the use of highly polluting substances both for cleaning the material to be treated and for the treatment itself. On the other hand it must use primers which, as well themselves releasing highly polluting substances, are unable to guarantee a seal under all operating conditions (in particular if there is contact with particularly aggressive fluids).

An alternative method (described for example in patent US RE 38,087E) for the production of tubes for conveying petrol, involves plasma treatment of the fluorinated surface using inert gases such as Ar and N₂. Such treatment aims to substitute part of the fluorine atoms present on the surface with a specific quantity of oxygen atoms. On said layer with added oxygen a covering layer, which may consist of a thermoplastic resin or a rubber, is then hot extruded. In this way good adhesion can be achieved between the matrix of fluorinated material and the covering thermoplastic and/or rubber matrix.

Similar results are also obtained in patent EP 185 590, as well as with plasma treatments using oxygen and/or its mixtures with a minimum content of 10% (patent EP 190 334).

However, said method is also not without disadvantages if applied to the case of covering a perfluorinated material with rubber.

Tests have demonstrated both that the adhesion between a perfluorinated material modified by the addition of oxygen atoms and a rubber is in many cases insufficient, and that the adhesion obtained is not able to withstand all of the substances normally conveyed in the tubes.

Another technique used involves plasma treatment of the surface using inert gas, followed by organic monomer grafting both in the gaseous phase and by subsequent immersion in solution.

But again in this case there is the problem of pollution, since solvents have to be used to clean the organic residues on the surface and/or to solubilise the organic monomers.

In this situation the technical purpose which forms the basis of the present invention is the production of a multi-layer product which overcomes the above-mentioned disadvantages, as well as the provision of a method for its production.

In particular, the technical purpose of the present invention is production of a product in which there is lasting direct adhesion between a rubber and a perfluorinated material, which resists chemical attacks and mechanical and temperature stresses.

The technical purpose of the present invention is also to provide a method for production of the above-mentioned product which does not involve environmental pollution problems.

The technical purpose specified and the aims indicated are substantially achieved by a multi-layer product and a method for its production as described in the claims herein.

Further characteristics and the advantages of the present invention are more apparent from the detailed description which follows, of several preferred, non-limiting embodiments of a multi-layer product and the method for its production.

According to the present invention the multi-layer product (such as a tube) comprises at least a first layer mainly made of a perfluorinated material and having an outer surface modified at a molecular level and at least one covering layer mainly made of rubber and applied on the outer surface of the first layer without the insertion of any adhesive between them.

The perfluorinated material is preferably selected from PFA, MFA, PTFE, FEP or combinations of their monomers, whilst the rubber is selected from EPDM, EPM, IIR and HaloIIR, or their combinations.

As regards both the first layer and the covering layer, the materials may be used pure, or with one or more additives, such as a conductive additive, or a pigment.

In particular, for the covering layer, it is preferable that EPDM, EPM, IIR, HaloIIR and their combinations represent at least 30% of the layer.

The core of the present invention is the method used to modify the outer surface of the first layer.

In accordance with the present invention, to obtain optimum adhesion between a perfluorinated material and any type of rubber, the outer surface of the first layer must be modified in such a way as to reduce the quantity of fluorine F atoms and, at the same time, create a distribution of hydrogen H atoms and/or nitrogen N atoms, thus creating C-H and/or C-N bonds. Moreover, the formation of any new bonds with oxygen O atoms must be avoided (that is to say, C=O, C-O, COOH, CON bonds, etc.). Therefore, at the end of the treatment, the surface must not have changes in the content of oxygen atoms. This means that, if the material comprises only PTFE or FEP, the surface treated must not have oxygen atoms, whilst if the perfluorinated material also comprises MFA or PFA (which themselves contain oxygen), the quantity of oxygen present on the surface treated must be equal to that present in the untreated material.

In the preferred embodiments, the quantity of fluorine on the surface of the first layer is reduced, compared with the unmodified perfluorinated material, by at least 3%. Moreover, as indicated, the surface treated contains nitrogen (in the preferred embodiments at least 3% relative to the quantity of fluorine) and/or hydrogen.

Thanks to such surface modification, a separation load greater than 2.45 N/mm was obtained between the first layer and the outer layer.

In particular, when the covering layer is EPDM and/or EPM and/or IIR-based a separation load greater than 3.4 N/mm was obtained between the first layer and the outer layer.

As already indicated, the present invention is applied in particular in the case of a product consisting of a multi-layer tube. Advantageously, the first layer constitutes the inner sheath of the multi-layer tube.

The method for obtaining a product in accordance with the present invention generally involves the following operating steps:
- a step in which at least a first layer mainly made of a perfluorinated material with an outer surface is obtained; it should be noticed that, depending on requirements, this first step may coincide with a first layer formation step, or it may only consist of obtaining a first layer which was already formed in advance (even a long time beforehand);
- a modification step during which the outer surface of the first layer is subjected to molecular modification;
- a step of applying at least one covering layer, mainly made of rubber, on the outer surface of the first layer, without inserting any adhesive between them;
- and a final step in which the covering layer is vulcanised.

Moreover, in general before or after the vulcanisation step, additional layers may also be produced on top of the covering layer.

The materials in the first layer and the covering layer are the same as indicated above relative to the multi-layer product.

From what is indicated above relative to the finished product, it follows that, in accordance with the present invention, the molecular modification step must involve molecular modification of the outer surface in such a way that, compared with the unmodified perfluorinated material, it has a reduction in the quantity of fluorine F atoms (advantageously equal to at least 3%) as well as the appearance of a distribution of hydrogen H atoms and/or nitrogen N atoms. Moreover, the molecular modification step must be carried out in such a way as to avoid the formation of new bonds with oxygen atoms so that after treatment the surface of the first layer substantially has the same oxygen O atom content as the untreated material.

In the preferred embodiment, the molecular modification step is obtained by means of plasma treatment on the outer surface of the first layer.

Advantageously, said plasma treatment may be carried out with the following operating parameters:
- frequency between 0.1 and 1000 MHz; in a preferred embodiment this is equal to 13.56 MHz;
- specific power between 0.2 and 2 W/cm²; in a preferred embodiment this is equal to 0.7 W/cm²;
- use of at least one inorganic gas; in the preferred embodiments hydrogen, nitrogen, ammonia, helium, argon or ammonia are used on their own, in combination or in successive steps;
- BIAS value greater than 200 V;
- duration of less than 15 minutes.

Moreover, the plasma treatment may be carried out using microwaves, on their own or in combination.

Depending on requirements, the treatment may be performed in a vacuum or in air.

However, the pressure is preferably greater than or equal to 10 Pa.

According to requirements, the molecular modification step may be preceded by a step of cleaning the outer surface of the first layer, for example with an additional plasma treatment.

Example of application.

The following is the data relative to application of the present invention to the case of a two-layered tube in which the inner sheath (first layer) consists of white MFA and the covering layer is EPM rubber.

After a cleaning step (not essential) using an argon plasma, molecular modification of the sheath was achieved by means of a N₂ and H₂ (1/3 ratio) nitrogen-based plasma treatment with a specific power of 0.7 W/cm², frequency of 13.56 MHz and duration of 5 minutes.

The rubber was then vulcanised in an autoclave in the standard way.

To check the adhesion strength achieved between the MFA and the EPM, the following tests were then carried out on the tube just as it was, and on the tube after various conditioning treatments.

The results of said tests carried out on samples of tube are shown below.

| **Type of conditioning** | **Separation load** |
|---|---|
| No conditioning | 4.9 kg/cm |
| Sample aged in air at 120°C for 72 hours | 5.3 kg/cm |
| Sample immersed in fuming HNO₃ for 72 hours at room temperature | 5.1 kg/cm |
| Sample immersed in fuming H₂SO₄ for 72 hours at room temperature | 5.2 kg/cm |
| Sample immersed in acetone for 72 hours at room temperature | 4.5 kg/cm |

In another test the sample was immersed in toluene for 72 hours at room temperature. In this case it was found that the toluene (predictably) caused the EPM rubber to swell, but it did not in the least affect adhesion between the EPM and the MFA.

Finally, two samples of the first layer respectively treated as indicated above and untreated, were also subjected to XPS surface analysis using a SCIENTA ESCA 200 instrument set with the following operating parameters:

| | |
|---|---|
| Primary beam | Al Kα x-ray |
| Primary beam energy | 1486.6 eV |
| Area analysed | 1x0.2 mm² |
| Energy resolution | 0.4 eV |
| Flood Gun | ON |

The parallel study of the spectra of the untreated MFA and that subjected to plasma treatment revealed the following:
- a reduction in the fluorine F peak in the treated sample (consequence of reducing the quantity of fluorine);
- no change in the oxygen peak (proof of the absence of new bonds with oxygen in the treated surface);
- variation of the carbon C peak. In the untreated sample the core level around 290 eV shows a single peak characteristic of CF₂-CF₂ bonds, whilst in the treated sample there was a division into two peaks corresponding to the formation of C-H and C-N bonds;
- appearance, in the treated sample, of a nitrogen N peak around 400 eV (corresponding to the presence of N-C and N-H bonds).

The present invention therefore brings important advantages.

Thanks to the present invention, it is possible to produce a product in which there is lasting direct adhesion between a rubber and a perfluorinated material, which resists chemical attacks and mechanical and temperature stresses.

Moreover, with the preferred method disclosed (plasma treatment) there are no environmental pollution problems.

In addition, according to the present invention, it is possible to obtain adhesion of a rubber on a perfluorinated material even at room temperature and years after the production of the perfluorinated material.

The flexibility of this system is particularly useful since it allows the construction of multi-layer mandrel tubes which have different structures (spiral, wavy, smooth, etc.).

Moreover, the tubes (and the other products) obtained in this way can be used in any sector: food, chemical, pharmaceutical, etc.

The products produced in accordance with the present invention can withstand ozone, ageing and polar solvent products, even covered by them, without the use of additives which are harmful to health and/or the environment.

In tubes made in accordance with the present invention in which the inner sheath is made of perfluorinated material, even if the sheath accidentally breaks, minimum pollution is guaranteed and there is no risk of the sheath becoming detached from the covering. This prevents implosion of the lower layer, which could occur if there were insufficient adhesion between the two layers, or if a primer were used (in the latter case, if a fluid conveyed managed to infiltrate between the connector shank and the lower layer, it would solubilise the adhesive).

It should also be noticed that the present invention is relatively easy to produce and that even the cost for implementing the invention is not very high.

The invention described may be modified and adapted without thereby departing from the inventive concept.

All details of the invention may be substituted by technically equivalent elements and in practice all materials used, as well as the shapes and dimensions of the various components, may be any according to requirements.

## Claims

1. A multi-layer product comprising at least a first layer mainly made of a perfluorinated material and having a modified outer surface, and at least one covering layer mainly made of rubber and applied on the outer surface of the first layer without any adhesive being inserted between them, **characterised in that** the outer surface of the first layer is modified in such a way that, compared with the unmodified perfluorinated material, it has a reduced quantity of fluorine F atoms, a distribution of hydrogen H atoms and/or nitrogen N atoms, the outer surface substantially having the same oxygen atom content as the untreated perfluorinated material.

2. The multi-layer product according to claim 1, **characterised in that** the perfluorinated material is selected from PFA, MFA, PTFE, FEP or combinations of their monomers.

3. The multi-layer product according to claim 1 or 2, **characterised in that** the modified outer surface has a quantity of fluorine atoms F reduced by at least 3% compared with the unmodified perfluorinated material.

4. The multi-layer product according to any of the foregoing claims, **characterised in that** the first layer also comprises one or more additives.

5. The multi-layer product according to claim 4, **characterised in that** the first layer also comprises at least one conductive additive.

6. The multi-layer product according to claim 4, **characterised in that** the first layer also comprises at least one pigment.

7. The multi-layer product according to any of the foregoing claims, **characterised in that** the covering layer also comprises one or more additives.

8. The multi-layer product according to claim 7, **characterised in that** the covering layer also comprises at least one conductive additive.

9. The multi-layer product according to claim 7, **characterised in that** the covering layer also comprises at least one pigment.

10. The multi-layer product according to any of the foregoing claims, **characterised in that** it comprises a plurality of layers.

11. The multi-layer product according to any of the foregoing claims, **characterised in that** the covering layer is EPDM and/or EPM and/or IIR and/or HaloIIR-based.

12. The multi-layer product according to claim 11, **characterised in that** the covering layer comprises at least 30% of EPDM and/or EPM and/or IIR and/or HaloIIR and/or their combinations.

13. The multi-layer product according to any of the foregoing claims, **characterised in that** the separation load between the first layer and the outer layer is greater than 2.45 N/mm.

14. The multi-layer product according to claims 12 and 13, **characterised in that** the covering layer is EPDM and/or EPM and/or IIR-based and **characterised in that** the separation load between the first layer and the outer layer is greater than 3.4 N/mm.

15. The multi-layer product according to any of the foregoing claims, **characterised in that** it is a tube and also **characterised in that** the first layer constitutes an inner sheath of the tube.

16. A method for producing multi-layer products comprising the operating steps of:
- obtaining at least a first layer mainly made of perfluorinated material and having an outer surface;
- subjecting the outer surface of the first layer to molecular modification;
- applying at least one covering layer, mainly made of rubber, on the outer surface of the first layer without inserting any adhesive between them; and
- vulcanising the covering layer;
the method being **characterised in that** the molecular modification step involves molecular modification of the outer surface in such a way that, compared with the unmodified perfluorinated material, it has a reduced quantity of fluorine F atoms, a distribution of hydrogen H atoms and/or nitrogen N atoms, the molecular modification step being carried out in such a way as to prevent the formation of bonds with oxygen atoms, so that the modified outer surface substantially has the same oxygen atom content as the unmodified perfluorinated material.

17. The method according to claim 16, **characterised in that** the perfluorinated material is selected from PFA, MFA, PTFE, FEP or combinations of their monomers.

18. The multi-layer product according to claim 16 or 17, **characterised in that** the covering layer is EPDM and/or EPM and/or IIR and/or HaloIIR-based.

19. The multi-layer product according to any of the claims from 16 to 18, **characterised in that** the molecular modification step involves removal of at least 3% of the quantity of fluorine present on the outer surface of the first layer.

20. The method according to any of the claims from 16 to 19, **characterised in that** the molecular modification step is achieved by means of plasma treatment on the outer surface of the first layer.

21. The method according to claim 20, **characterised in that** the plasma treatment is carried out at a frequency of between 0.1 and 1000 MHz.

22. The method according to claim 21, **characterised in that** the plasma treatment is carried out at a frequency of 13.56 MHz.

23. The method according to claim 20, **characterised in that** the plasma treatment is carried out using microwaves on their own or in combination.

24. The method according to claim 20, 21, 22 or 23, **characterised in that** the plasma treatment is carried out with a specific power of between 0.2 and 2 W/cm².

25. The method according to claim 24, **characterised in that** the plasma treatment is carried out with a specific power of 0.7 W/cm².

26. The method according to any of the claims from 20 to 25, **characterised in that** the plasma treatment is carried out using at least one inorganic gas.

27. The method according to claim 26, **characterised in that** the plasma treatment is carried out using hydrogen, nitrogen, ammonia, helium, argon or ammonia on their own, in combination or in successive steps.

28. The method according to any of the claims from 20 to 27, **characterised in that** the plasma treatment is carried out in a vacuum.

29. The method according to any of the claims from 20 to 27, **characterised in that** the plasma treatment is carried out at a pressure greater than or equal to 10 Pa.

30. The method according to any of the claims from 20 to 29, **characterised in that** the plasma treatment is carried out at a BIAS value greater than 200 V.

31. The method according to any of the claims from 20 to 30, **characterised in that** the plasma treatment has a duration of less than 15 minutes.

32. The method according to any of the claims from 16 to 31, **characterised in that** it also comprises, before the molecular modification step, a step of cleaning the outer surface of the first layer.

33. The method according to claim 32, **characterised in that** the cleaning step is carried out by means of a plasma treatment.

## Amended claims

### Amended claims in accordance with Rule 86(2) EPC.

**16.** material, it has a reduced quantity of fluorine F atoms, a distribution of hydrogen H atoms and/or nitrogen N atoms, the molecular modification step being carried out in such a way as to prevent the formation of bonds with oxygen atoms, so that the modified outer surface substantially has the same oxygen atom content as the unmodified perfluorinated material.

**17.** The method according to claim 16, **characterised in that** the perfluorinated material is selected from PFA, MFA, PTFE, FEP or combinations of their monomers.

**18.** The method according to claim 16 or 17, **characterised in that** the covering layer is EPDM and/or EPM and/or IIR and/or HaloIIR-based.

**19.** The method product according to any of the claims from 16 to 18, **characterised in that** the molecular modification step involves removal of at least 3% of the quantity of fluorine present on the outer surface of the first layer.

**20.** The method according to any of the claims from 16
